# EUROPÄISCHE PATENTANMELDUNG

(11) **EP 2 308 707 A1**
(43) Veröffentlichungstag der Anmeldung: **13.04.2011**
(21) Anmeldenummer: 09174634.7
(22) Anmeldetag: 30.10.2009
(51) Int. Cl.: B60J 7/10, D04B 21/16, B32B 27/12, B60P 7/04

(54) **Plane für einen Aufbau eines Lastkraftwagens und Aufbau für einen Lastkraftwagen**

(30) Priorität: 12.10.2009 DE 102009049136
(71) Anmelder: Schmitz Cargobull AG, 48341 Altenberge (DE)
(72) Erfinder: Ernestin, Thomas, Dipl.-Ing., 49504 Lotte (DE); Maschmann, Thomas, Dipl.-Ing., 48282 Emsdetten (DE)
(74) Vertreter: Cohausz & Florack

(57) **Zusammenfassung**

Die vorliegende Erfindung betrifft eine Plane für einen Aufbau A eines Lastkraftwagens, insbesondere für den Aufbau A eines Trailers 1 eines Sattelzuges, mit einer flächigen textilen Einlage 5, die in eine Matrix 12 aus Kunststoff eingebettet ist, und einen Aufbau A für einen Lastkraftwagen. Die erfindungsgemäße Plane und der LKW-Aufbau lassen sich kostengünstig herstellen und besitzen gleichzeitig optimale Gebrauchseigenschaften. Dies wird dadurch erreicht, dass die textile Einlage 5 als Kettengewirk ausgebildet ist.

## Beschreibung

Die Erfindung betrifft eine Plane für einen Aufbau eines Lastkraftwagens, insbesondere für den Aufbau eines Trailers eines Sattelzuges, mit einer flächigen textilen Einlage, die in eine Matrix aus Kunststoff eingebettet ist. Eine solche Plane ist beispielsweise aus der DE 197 54 238 C1 bekannt.

Ebenso betrifft die Erfindung einen mit einer solchen Plane ausgestatteten Aufbau für einen Lastkraftwagen, insbesondere für einen Trailer eines Sattelzuges. Aufbauten dieser Art sind beispielsweise in der DE 197 20 525 C2 und DE 20 2006 003 548 U1 beschrieben.

Daneben ist auch in der DE 44 41 842 A1 eine LKW-Plane dokumentiert, die als mehrschichtiges textiles Flächengebilde ausgebildet ist und mindestens eine Schicht aus einer schnittbeständigen Maschenware aufweist. Bei der schnittfesten Maschenware kann es sich beispielsweise um eine Raschel- oder Häkelgalonware handeln, die aus Aramidfasern hergestellt ist. Um die erforderliche Dichtheit der Plane zu gewährleisten, kann mindestens eine Seite der Maschenware durch eine Folie aus wetterfestem Polymer abgedeckt sein. An deren Rückseite wird die schnittfeste Maschenware durch Anschweißen, Ankleben oder Anschäumen befestigt.

Auch eine aus der DE 299 22 552 U1 bekannte mehrschichtige, beispielsweise für Fahrzeuge verwendbare Abdeckung umfasst ein mehrlagiges Gewirke oder Gestrick, das mit einer wasserdichten Folie oder Beschichtung versehen ist. Die wasserdichte Folie oder Beschichtung kann dabei aus Elastomer oder einem sonstigen Kunststoff mit ausreichender Flexibilität bestehen.

Des Weiteren ist aus der DE 10 2007 011 758 A1 eine insbesondere für Lastkraftwagen bestimmte Fahrzeugplane bekannt, die aus einem flächigen elastomeren Kunststoff mit einem eingebetteten oder aufgebrachten Festigkeitsträger besteht. Als Festigkeitsträger wird dabei ein Gestrick aus Glas- oder Basaltfasern und einer darauf aufgebrachten Matrix aus einem elastomeren Kunststoff oder Elastomervulkanisiat verwendet.

Um einen optimierten Schutz gegen Vandalismus zu gewährleisten, ist darüber hinaus in der EP 0 675 220 B1 eine Abdeckplane für LKW's oder anderen Gütertransportfahrzeugen vorgeschlagen worden, die auf einer Seite mit einer aus einer drahthaltigen Maschenware bestehenden Schutzschicht belegt ist. Die Schutzschicht besteht zumindest teilweise aus Aramid-, PE- oder Glasfasern und ist, ähnlich wie beim Stand der Technik gemäß der DE 44 41 842 A1, als Kettenwirk-, Raschel- oder Häkelgalonware ausgebildet. Das so gebildete Maschenwerk soll nachträglich auf eine vorgefertigte Plane aufgeklebt werden.

In der EP 1 413 669 B1 ist zudem ein mehrlagiges Flächenmaterial auf Textilbasis beschrieben, das ein Trägermaterial in Form eines textilen, als Maschenware ausgebildeten Flächengebildes und eine auf das Trägermaterial aufgebrachte Beschichtung aufweist. Das bekannte Flächengebilde kann dabei ebenfalls für die Herstellung von LKW-Planen verwendet werden.

Schließlich ist in der FR 2 877 876 A1 ein weiteres für die Herstellung von LKW-Planen geeignetes flexibles Verbundmaterial geringer Dicke beschrieben, das eine flexible gestrickte Verstärkungsschicht umfasst, die in einer thermisch aufschmelzbaren Matrix eingeschlossen ist.

In der Praxis eingesetzte Planen für Trailer weisen üblicherweise ein Planengrundgewebe auf, das aus Polyesterfäden gewoben und mit PVC (Polyvinylchlorid) beschichtet ist. Das Grundgewebe wird dabei üblicherweise auf Webmaschinen hergestellt und stellt ein textiles Flächengebilde dar, das durch die rechtwinklige Verkreuzung von mindestens zwei Fadensystemen, "Kette" und "Schuss", zustande kommt. In der Praxis wird ein solches Gewebe auch als "Polyestergewebe" bezeichnet. Optimale Gebrauchseigenschaften bei gleichzeitig minimierten Herstellkosten können dabei, wie in der DE 197 54 238 C1 erläutert, dadurch erreicht werden, dass die Kettfäden in Fahrtrichtung und die Schussfäden des Polyestergewebes quer dazu ausgerichtet sind.

Die auf das Polyestergewebe aufgebrachte PVC-Beschichtung schützt das Ladegut vor Witterungseinflüssen, wie Nässe und Schmutz. Des Weiteren lässt sich die PVC-Beschichtung nach den Wünschen der jeweiligen Nutzer einfärben. Auch können auf die PVC-Beschichtung zu Werbezwecken Beschriftungen oder Bilder aufgebracht werden.

Um die LKW-Aufbauten möglichst leicht zu gestalten, sollen die von den Aufbauten getragenen Planen bei vielen in der Praxis eingesetzten Konstruktionen selbst eine aussteifende Funktion übernehmen. Auch sollen die Planen eine ausreichende Festigkeit besitzen, um sie bei geschlossenem Aufbau so spannen zu können, dass die Seiten- und Dachflächen des Aufbaus möglichst glatt sind.

Diese Anforderungen können dadurch erfüllt werden, dass die aus einem Polyestergewebe mit einer PVC-Beschichtung bestehenden Planen zumindest an den Stellen, die im praktischen Einsatz besonderen Belastungen unterworfen sind, zusätzlich verstärkt werden. Dazu werden an den betreffenden Stellen sogenannte "Quer-", "Längs-" oder "Diagonalgurte" auf die Plane aufgeschweißt. Der mit dieser Tätigkeit verbundene Zeit- und Kostenaufwand ist erheblich.

Vor dem Hintergrund des voranstehend erläuterten Standes der Technik bestand die Aufgabe der Erfindung darin, eine Plane für einen LKW-Aufbau und einen LKW-Aufbau anzugeben, die kostengünstig hergestellt werden können und gleichzeitig optimale Gebrauchseigenschaften besitzen.

Diese Aufgabe ist in Bezug auf die Plane erfindungsgemäß dadurch gelöst worden, dass eine solche Plane gemäß Anspruch 1 ausgebildet ist. Vorteilhafte Ausgestaltungen der erfindungsgemäßen Plane sind in den auf Anspruch 1 rückbezogenen Ansprüchen angegeben und werden nachfolgend erläutert.

In Bezug auf den Aufbau für einen Lastkraftwagen besteht die Lösung der oben angegebenen Aufgabe erfindungsgemäß darin, dass ein solcher Aufbau gemäß Anspruch 11 ausgebildet ist. Vorteilhafte Ausgestaltungen des erfindungsgemäßen Aufbaus sind in den auf Anspruch 11 rückbezogenen Ansprüchen angegeben und werden hieran anschließend erläutert.

Mit der Erfindung steht eine Plane für einen Aufbau eines Lastkraftwagens, insbesondere für den Aufbau eines Trailers eines Sattelzuges, zur Verfügung, die in Übereinstimmung mit dem Stand der Technik eine flächige textile Einlage aufweist, die in eine Matrix aus Kunststoff eingebettet ist. Erfindungsgemäß ist nun die textile Einlage als Kettengewirke ausgebildet.

Im Unterschied zu Planen, die durch ein in sie eingebettetes Gewebe verstärkt sind, ist es bei einer erfindungsgemäßen Plane aufgrund des Kettengewirkes problemlos möglich, die textile Einlage so zu gestalten, dass die Plane selbst eine für jede Anforderung ausreichende Festigkeit und Formstabilität auch unter Last besitzt. So ist es bei Verwendung eines Gewirkes als textile Einlage sehr viel einfacher als bei einem Gewebe, an den Stellen, die im praktischen Einsatz jeweils besonders hohen Belastungen unterworfen sind, Verstärkungsfäden in das Gewirk einzubauen, durch die die Plane an der betreffenden Stelle die erforderliche Belastbarkeit erhält.

Typischerweise besteht dabei ein erfindungsgemäß als textile Einlage einer LKW-Plane vorgesehenes Gewirk aus einer Verkreuzung von mindestens zwei Fadensystemen, die mit mindestens einem dritten Faden, dem sog. Bindekettfaden, miteinander vernäht sind. Schon durch diese besondere Art und Weise der Bindung erhält ein Gewirk verbesserte Festigkeitseigenschaften. Zusätzlich können mit Hilfe gängiger Wirktechnologien wahlweise großflächig oder lokal eng begrenzte Gewirkverstärkungen aus unterschiedlichsten Materialien eingebracht werden, die sich in eine zur Aufnahme der jeweiligen Belastung optimale Richtung erstrecken. Mit der Erfindung steht somit eine Plane zur Verfügung, die Festigkeitseigenschaften aufweist, ohne dass es dazu zusätzlich aufgebrachter Längs-, Quer- oder Diagonalgurte bedarf.

In der einfachsten Ausführungsform ist das Kettengewirke durch die es aufnehmende Kunststoffbeschichtung der erfindungsgemäßen Plane festgelegt. Alternativ ist es allerdings auch möglich, in einem separaten Arbeitsschritt, beispielsweise durch Wärmezufuhr oder gezieltes Verkleben, eine Fixierung des Gewirkes vorzunehmen, um es dann in die Kunststoffmatrix einzubetten. Auf diese Weise lässt sich die Festigkeit und Formstabilität der Plane weiter unterstützen.

Die lokal eng begrenzte oder sich großflächig erstreckende Verstärkung der Plane kann dadurch vorgenommen werden, das ein oder mehrere Fäden des Kettengewirkes als Verstärkungsfäden ausgebildet sind, die aus einer Faser mit einer höheren Festigkeit als andere Fäden des Kettengewirks bestehen. Sie können dabei unmittelbar im Wirkprozess in das erfindungsgemäß als textile Einlage der Plane vorgesehene Kettengewirke eingearbeitet werden.

Als Verstärkungsfäden kann Metalldraht oder eine für diese Zwecke in technischen Textilien bereits eingesetzte Hochleistungsfaser verwendet werden. Mit Hilfe solcher Fasern und Drähte lassen sich eine zusätzliche Ladungssicherung, ein zusätzlicher Diebstahlschutz und ein wirksamer Schutz vor Vandalismus bewerkstelligen. Bei ausreichender Leitfähigkeit können die im Gewirk eingebrachten Verstärkungsfasern und -drähte zudem auch zur Weiterleitung von elektrischem Strom oder Signalen genutzt werden.

Abhängig von den jeweiligen Anforderungen an die Festigkeit und Formhaltigkeit kann das Kettengewirke biaxial oder multi-axial ausgebildet sein.

Die im Gewirk allgemein eingesetzten Fäden können aus unterschiedlichsten Materialien und Materialkombinationen bestehen. Besonders kostengünstig und gleichzeitig praxisgerecht kann eine erfindungsgemäße Plane jedoch dann verwirklicht werden, wenn die Fäden des Gewirkes aus einer Polyester-Faser bestehen. Es sind Filamente, Fäden und Garne aus Polyester denkbar. Solche Fasern stehen in einer großen Bandbreite ihrer Eigenschaften zur Verfügung und lassen sich besonders einfach in eine PVC-Beschichtung einbetten, wenn diese die Matrix der erfindungsgemäßen Plane bilden soll.

Eine beispielsweise für Werbezwecke oder spezielle Transportaufgaben, bei denen die transportierte Ware besonders geschützt werden muss, geeignete Ausgestaltung der Erfindung ist dadurch gekennzeichnet, dass der Kunststoff der Matrix auf ihrer dem Innenraum des Aufbaus zugeordneten Seite sich von dem Kunststoff der Matrix auf ihrer der Außenseite des Aufbaus zugeordneten Seite unterscheidet.

Die die Matrix bildende Kunststoffbeschichtung der textilen Kettengewirk-Einlage kann in an sich bekannter Weise beispielsweise mit Hilfe von Streich- oder Kalanderanlagen aufgetragen werden. Zur Farbgebung können dem Kunststoff Farbpigmente beigemischt werden.

Auch ist es denkbar, das erfindungsgemäß vorgesehene Kettengewirke inline zur Gewirkerzeugung zu beschichten, wobei dabei unterschiedlichste Beschichtungsmaterialien/ -suspensionen verwendet werden können.

Anstelle einer separat aufgebrachten Beschichtung kann die Kunststoffmatrix der Plane auch durch in das Kettengewirke eingearbeitete Kunststofffäden gebildet sein, die durch Wärmezufuhr des Kettengewirkes geschmolzen sind.

Soll eine erfindungsgemäße Plane mit bestimmter Durchlässigkeit oder weiter verbesserter Undurchlässigkeit für Feuchtigkeit zur Verfügung gestellt werden, so kann dies dadurch bewerkstelligt werden, dass zusätzlich zu dem erfindungsgemäß als Einlage vorgesehenen Kettengewirke ein sich mindestens abschnittsweise flächig, insbesondere vollflächig, über das Kettengewirke erstreckendes Vlies in die Matrix aus Kunststoff eingebettet ist. Dieses Vlies kann auf der dem Innenraum oder auf der der Außenseite des jeweiligen Fahrzeugs zugeordneten Seite des Gewirkes aufgebracht werden. Durch das Vlies erhält man eine zusätzliche Glättung der Gewirkaußenfläche. Das Vlies gibt dem Planenmaterial zudem eine zusätzliche Festigkeit und kann so ausgelegt werden, dass das Material dampfdichter wird. Alternativ ist es jedoch auch denkbar, das Vlies nach Art einer Membran auszubilden, die von außen keine Feuchtigkeit nach innen dringen lässt, jedoch den Austritt von Feuchtigkeit aus dem Innenraum nach außen zulässt.

Wird die Kunststoffbeschichtung mehrschichtig aufgetragen, so kann dies so erfolgen, dass in einem ersten Beschichtungsschritt zunächst mit einem einfarbigen preiswerten Basismaterial flächig beschichtet wird. Damit erhält man in einem kontinuierlichen Fertigungsprozess einfarbige "Rollenware". In einem nachfolgenden Schritt wird dann eine farbige Folie aufgebracht, um die gewünschte Farbigkeit zu erzeugen. Diese farbige Folie kann thermisch oder auch chemisch mit dem Basismaterial verbunden oder verklebt werden. Dabei kann die farbige Folie vor und auch nach dem Aufbringen auf das Grundmaterial werbewirksam gestaltet und bedruckt werden. Auf diese Weise lassen sich wesentliche Schritte der Planenherstellung einerseits und der Planenbedruckung/-gestaltung zeitlich und räumlich voneinander getrennt durchführen. Hieraus ergeben sich zusätzliche Möglichkeiten der Prozessoptimierung und Kostensenkung.

Selbstverständlich kann auch eine erfindungsgemäße Plane erforderlichenfalls mit Aufnahmen für Funktionsteile, aber auch mit den jeweiligen Funktionsteilen selbst, wie z. B. Ösen, Riemen, Gurte, Halterungen, Planenspanner, Gurthaken, Rollen etc., ausgestattet werden.

Den voranstehenden Erläuterungen entsprechend ist ein erfindungsgemäßer Aufbau für einen Lastkraftwagen, insbesondere für einen Trailer eines Sattelzuges, der Gerüst aufweist, das eine Plane trägt, die sich in Längsrichtung des Lastkraftwagens erstreckt, dadurch gekennzeichnet, dass die Plane in erfindungsgemäßer Weise ausgebildet ist. Ein optimales Verhalten unter den in der Praxis auftretenden Lasten ergibt sich dabei dann, wenn die Stehfäden des Gewirkes in Längsrichtung des Fahrzeugs ausgerichtet sind, während die Schussfäden quer dazu liegen. Die Stehfäden dieses Gewirkes liegen in Fahrtrichtung und die Schussfäden liegen senkrecht zur Fahrtrichtung.

Nachfolgend wird die Erfindung anhand einer ein Ausführungsbeispiel darstellenden Zeichnung näher erläutert. Es zeigen:
- Fig. 1: einen Trailer für einen Sattelzug in seitlicher Ansicht;
- Fig. 2: einen Ausschnitt eines multiaxialen Kettengewebes in Draufsicht;
- Fig. 3: einen Ausschnitt eines biaxialen Kettengewebes in Draufsicht;
- Fig. 4: eine bei dem in Fig. 1 dargestellten Trailer eingesetzte Plane in einem Schnitt entlang der in Fig. 1 eingezeichneten Schnittlinie X-X.

Der konventionell aufgebaute Trailer 1 des so genannten "Curtainsider"-Typs umfasst einen aus Stahlprofilen gebildeten quaderförmigen Aufbau A, der auf einem Fahrwerkschassis C montiert ist und einen mit zu transportierendem Gut befüllbaren Innenraum umgibt.

Die beiden Längsseiten des Aufbaus A sind in ebenfalls bekannter Weise jeweils durch eine Seitenplane 2 verschlossen. Aufgrund der hier gewählten Ansicht ist von den Seitenplanen 2 nur die der einen Längsseite des Trailers 1 zugeordnete sichtbar.

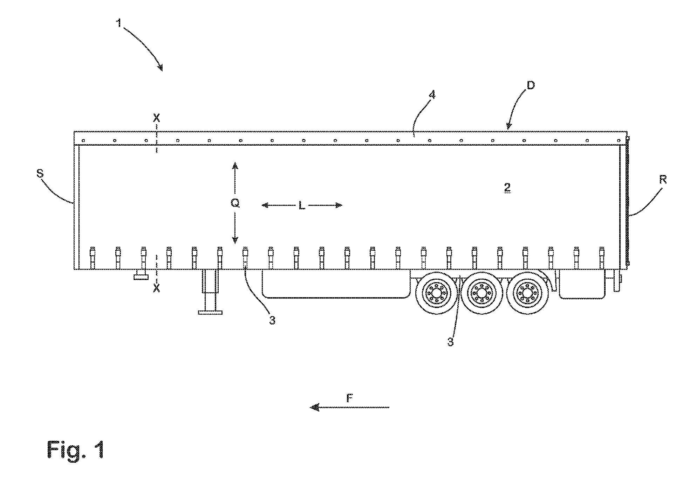

Die Seitenplanen 2 sind jeweils mit ihrem oberen Längsrand mittels hier nicht sichtbarer Führungsglieder in einem der ebenfalls nicht sichtbaren, als Führungsschiene ausgebildeten Längsträger des Aufbaus A geführt. In der in Fig.1 dargestellten verschlossenen Stellung sind die Seitenplanen 2 zusätzlich mittels in regelmäßigen Abständen über die Länge des Aufbaus A verteilten, an den Seitenplanen 2 befestigten Spanngliedern 3 gegen das Fahrwerkschassis C verspannt. Die Spannglieder greifen dazu um das hier nicht sichtbare jeweilige Längsseitenprofil des Fahrzeugchassis C.

Auf diese Weise ist bei verschlossenem Trailer durch die Seitenplane 2 eine glatte Seitenfläche gebildet. Um die Ladefläche des Trailers 1 von den Längsseiten her erreichbar zu machen, können die Spannglieder 3 gelöst und die jeweilige Seitenplane 2 in der Schiene des Aufbaus A geführt in Richtung der in Fahrtrichtung F vorderen Stirnwand S oder hinteren Rückwand R des Trailers 1 geschoben werden.

Das Dach D des Aufbaus A ist durch eine Dachplane 4 bedeckt, die zwischen den Längsträgern und den endseitigen, hier ebenfalls nicht sichtbaren Querträgern des Aufbaus 1 gespannt ist. Auch die Dachplane 4 ist dabei so straff gezogen, dass sie eine im Wesentlichen ebene Fläche bildet.

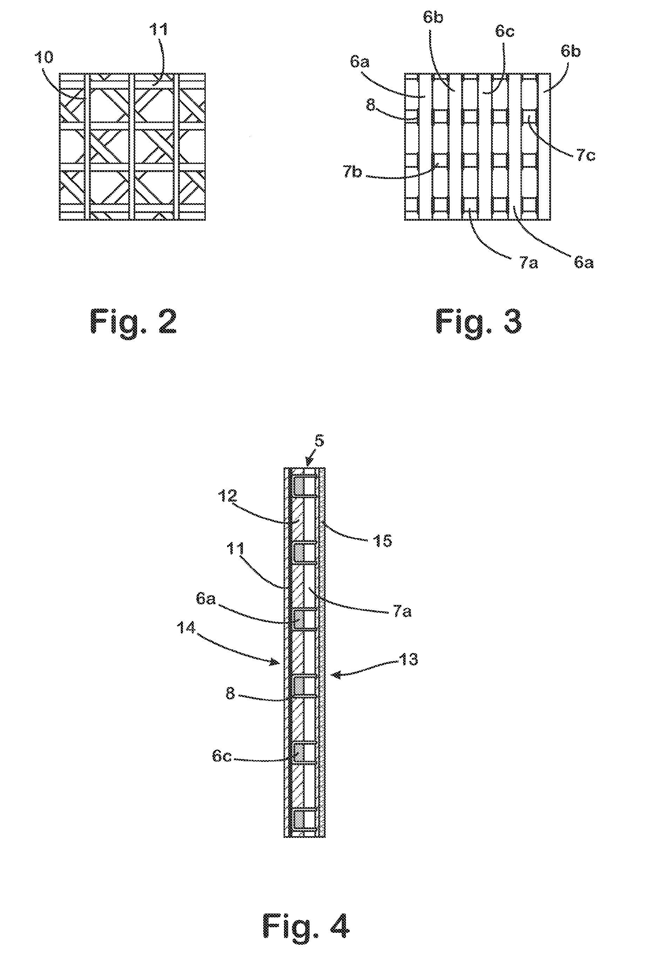

Die Seitenplanen 2 und die Dachplane 4 sind jeweils aus einem Planenbahnmaterial hergestellt, dessen grundsätzlicher Aufbau in Fig. 4 dargestellt ist. So weisen die Seitenplanen 2 und Dachplane 4 jeweils eine als Kettengewirke ausgebildete textile Einlage 5 auf.

Abhängig von den jeweils auftretenden Belastungen kann die Einlage 5 als multiaxiales Kettengewirke (Fig. 2) oder biaxiales Kettengewirke (Fig. 3) ausgebildet sein, wobei die in den Figuren 2 und 3 gezeigten Gewirkeformen lediglich beispielhaft zu verstehen sind. Entscheidend ist, dass es sich dabei um ein maschinell erzeugtes Gewirk handelt, bei dem die Stehfäden 6a, 6b, 6c und die Schussfäden 7a, 7b, 7c jeweils durch einen zusätzlichen Bindefaden 8 miteinander verbunden sind. Um ein optimales Lastaufnahmevermögen der Planen 2, 3 zu ermöglichen, sind beispielsweise im Fall, dass die Einlage 5 als biaxiales Gewirke gemäß Fig. 3 ausgebildet ist, die Stehfäden 6a, 6b, 6c der Einlage 5 in Längsrichtung L des Trailers 1 ausgerichtet, während die Schussfäden 7a, 7b, 7c jeweils in der quer dazu ausgerichteten Querrichtung Q verlaufen.

Die Steh-, Schuss- und Bindefäden 6a, 6b, 6c, 7a, 7b, 7c, 8 bestehen jeweils aus einem Polyestermaterial, wobei beispielsweise jeder dritte Schussfaden 7a aus einem höher festen Werkstoff besteht als die benachbart zu ihm angeordneten Schussfäden 7b, um die erforderliche Zugfestigkeit der Seitenplanen in Querrichtung Q zu gewährleisten. Genauso kann jeder zweite Stehfaden 6a aus einem höherfesten Werkstoff bestehen als die benachbart angeordneten Stehfäden 6b, 6c. Die aus höherfestem Material bestehenden Stehfäden 6a und Schussfäden 7a bilden so Verstärkungsfäden, durch die die Festigkeit der Plane in ihrer Längsrichtung L und Querrichtung Q verstärkt wird.

Alternativ zu der voranstehend erläuterten Ausgestaltung ist es auch möglich, zusätzlich zu den das Grundgewirk bildenden Stehfäden 6a-6c, Schussfäden 7a-7c und Bindefäden 8 Verstärkungsfäden 9, 10 in das die Einlage 5 jeweils bildende Kettengewirke einzuarbeiten, wie anhand des in Fig. 2 gezeigten multiaxialen Gewirkes demonstriert.

Auf den Stehfäden 6a-6c liegt bei den Seitenplanen 2 und der Dachplane 4 jeweils ein Vlies 11 auf, das die Einlage 5 vollflächig bedeckt und eine zusätzliche Sperre gegen den Durchtritt von Dampf oder Flüssigkeit durch die jeweilige Plane 2,4 bildet.

Die Kettengewirke-Einlage 5 und das Vlies 11 sind in eine aus einem PVC-Material gebildete Kunststoff-Matrix 12 eingebettet, die einerseits die erforderliche Dichtheit und Witterungsbeständigkeit der Planen 2,4 gewährleistet und andererseits die relative Lage der Steh- und Schussfäden der Kettengewirk-Einlage 5 sichert. Die PVC-Matrix 12 ist dabei beidseitig auf die Einlage 5 gestrichen worden, so dass die Einlage 5 sowohl auf der dem Betrachter zugewandten Außenseite 13 als auch auf der dem Innenraum des Trailers 1 zugeordneten Innenseite 14 der jeweiligen Plane 2,4 mit PVC-Material beschichtet ist.

Bei dem PVC-Material der Matrix 12 kann es sich beispielsweise um ein kostengünstiges einheitlich eingefärbtes Standardmaterial handeln, das gute Gebrauchseigenschaften aufweist, jedoch hinsichtlich seiner farblichen Gestaltung nicht an spezifische Wünsche des Nutzers angepasst ist.

Um das Erscheinungsbild des Trailers 1 dennoch zu individualisieren, ist auf der Außenseite der Seitenplanen 2 jeweils eine dünne Folie 15 aufkaschiert, die eine vorgegebene Farbgebung besitzt und beispielsweise mit einem Werbelogo, dem Schriftzug des Unternehmers oder anderen grafischen, hier nicht gezeigten Elementen bedruckt sein kann.

### BEZUGSZEICHEN

- 1: Trailer
- 2: Seitenplane
- 3: Spannglied
- 4: Dachplane
- 5: als Kettengewirke ausgebildete Einlage
- 6a-6c: Stehfäden der Einlage 5
- 7a-7c: Schussfäden der Einlage 5
- 8: Bindefäden der Einlage 5
- 9,10: Verstärkungsfäden der Einlage 5
- 11: Vlies
- 12: aus PVC-Kunststoff bestehende Matrix der Einlage 5
- 13: Außenseite der Seitenplane 2 bzw. der Dachplane 4
- 14: Innenseite der Seitenplane 2 bzw. der Dachplane 4
- 15: Folie
- A: Aufbau
- C: Fahrwerkschassis
- D: Dach des Aufbaus A
- F: Fahrtrichtung
- L: Längsrichtung des Trailers 1
- Q: Querrichtung der Seitenplane 2
- R: Rückwand
- S: Stirnwand

## Patentansprüche

1. Plane für einen Aufbau (A) eines Lastkraftwagens, insbesondere für den Aufbau (A) eines Trailers (1) eines Sattelzuges, mit einer flächigen textilen Einlage (5), die in eine Matrix (12) aus Kunststoff eingebettet ist, **dadurch gekennzeichnet, dass** die textile Einlage (5) als Kettengewirke ausgebildet ist.

2. Plane nach Anspruch 1, **dadurch gekennzeichnet, dass** ein oder mehrere Fäden (6a-8) des Kettengewirkes als Verstärkungsfäden ausgebildet sind, die aus einer Faser mit einer höheren Festigkeit als andere Fäden des Kettengewirks bestehen.

3. Plane nach Anspruch 2, **dadurch gekennzeichnet, dass** die Verstärkungsfäden (6a,7a) aus einem Metalldraht oder einer Hochleistungsfaser bestehen.

4. Plane nach einem der voranstehenden Ansprüche,
**dadurch gekennzeichnet, dass** das Kettengewirke biaxial ausgebildet ist.

5. Plane nach einem der Ansprüche 1 bis 3,
**dadurch gekennzeichnet, dass** das Kettengewirke multi-axial ausgebildet ist.

6. Plane nach einem der voranstehenden Ansprüche,
**dadurch gekennzeichnet, dass** die Matrix (12) aus einem PVC-Kunststoff besteht.

7. Plane nach einem der voranstehenden Ansprüche,
**dadurch gekennzeichnet, dass** die Fäden des Kettengewirkes aus einer Polyester-Faser bestehen.

8. Plane nach einem der voranstehenden Ansprüche,
**dadurch gekennzeichnet, dass** der Kunststoff der Matrix (12) auf ihrer dem Innenraum des Aufbaus zugeordneten Seite (14) sich von dem Kunststoff der Matrix (12) auf ihrer der Außenseite des Aufbaus (A) zugeordneten Seite (14) unterscheidet.

9. Plane nach einem der voranstehenden Ansprüche,
**dadurch gekennzeichnet, dass** die Matrix (12) der Plane (2,4) durch in das Kettengewirke eingearbeitete Kunststofffäden gebildet ist, die durch Wärmezufuhr geschmolzen sind.

10. Plane nach einem der voranstehenden Ansprüche,
**dadurch gekennzeichnet, dass** zusätzlich zu der als Kettengewirke ausgebildeten Einlage (5) ein sich mindestens abschnittsweise flächig sich über die Einlage (5) erstreckendes Vlies (11) in die Matrix (12) aus Kunststoff eingebettet ist.

11. Aufbau für einen Lastkraftwagen, insbesondere für einen Trailer (1) eines Sattelzuges, mit einem Gerüst, das eine Plane (2,4) trägt, die sich in Längsrichtung (L) des Lastkraftwagens erstreckt,
**dadurch gekennzeichnet, dass** die Plane (2,4) gemäß einem der Ansprüche 1 bis 10 ausgebildet ist.

12. Aufbau nach Anspruch 11, **dadurch gekennzeichnet, dass** die Stehfäden (6a-6c) der Einlage (5) in Längsrichtung (L) des Fahrzeugs ausgerichtet sind, während die Schussfäden (7a-7c) quer dazu liegen.
